# EUROPEAN PATENT APPLICATION

(11) **EP 3 243 638 A1**
(43) Date of publication of application: **15.11.2017**
(21) Application number: 17170186.5
(22) Date of filing: 09.05.2017
(51) Int. Cl.: B29C 67/00, C08L 67/04

(54) **COMPOSTABLE 3D PRINTING POLYMER COMPOSITION**

(30) Priority: 09.05.2016 EP 16168782
(71) Applicant: B4Plastics BVBA, 3630 Maasmechelen (BE)
(72) Inventor: WENMAKERS, Dirk, 3630 Maasmechelen (BE)
(74) Representative: Renkema, Jaap

(57) **Abstract**

The invention relates to a 3D printing composition comprising at least 2 thermoplastic polymers A and B, wherein polymer A has a glass transition temperature (Tg) of at least 50°C, and wherein polymer B has a Tg below 10°C and a Tm between 50°C and 180°C, as measured according to the method as given in ISO 11357-3 using a heating rate of 10K/min and a cooling rate of 10 K/min, to a method to prepare a 3D article and to a 3D article.

## Description

The invention relates to a 3D printing composition, that is easily compostable, for a method to make a 3D article, the 3D article and a method to improve biodegradation of the composition or article.

Compositions that are used for 3D printing are known in the art. In many applications PLA (polylactid acid) and ABS (acrylonitrile butadiene styrene copolymer) are applied as a material for 3D printing. Polylactid acid is known to be biodegradable. Articles made from PLA become however only slowly degradable when industrial composting conditions are applied. Such conditions typically constitute optimized composting parameters in well-controlled equipment requiring strong aeration and temperatures above 50°C during months with peaks ranging from 60 to 70°C. In contrast, home-composting is known to reach temperatures that are substantially lower at moderate aeration, leaving industrial-composting materials and plastics mostly unaffected in typical multi-month timeframes.

New materials used in 3D printing are based nowadays on well-established polymers, beyond PLA and ABS, such as polyamides and the like, to obtain complementary mechanical property profiles of the resulting 3D articles.

EP3045498 relates to a material for fused deposition modeling obtained by blending 10-900 parts by weight of a styrene-based resin (B1) obtained by copolymerization of an aromatic vinyl-monomer (b1) and a cyanated vinyl-monomer (b2), and/or 5-400 parts by weight of a thermoplastic resin (B2) having a glass transition temperature of 20°C or lower and/or 5-30 parts by weight of a plasticizer (B3), with respect to 100 parts by weight of a polylactic resin (A).

Since the rise of the 3D printing technology, many small users buy household machines and use large amounts of 3D printing materials, which sometimes end up in landfills or in the environment. Especially in prototyping, where 3D printing technology shows unbeatable flexibility and speed at low cost, the resulting articles are per definition only valuable during the prototype stage of projects. Degradation times of the materials used for 3D printing and their 3D printed articles, are currently very long, increasing the risk of micro-granulating and uncontrolled release into the ecosystem and more particular the food chain. There is a need for a 3D material which is ideally readily home-compostable and thereby reduces the footprint and environmental impact of the 3D printing technology. At the same time the 3D printing material should be excellent in printing and giving products with optimal properties for the respective application.

The object of the present invention is to provide a 3D printing composition that shows competitive printing characteristics while qualifying as being easily compostable.

The invention relates to a 3D printing composition comprising at least 2 thermoplastic polymers A and B, wherein polymer A has a glass transition temperature (Tg) of at least 50°C, and wherein polymer B has a T_{g} below 10°C and a Tₘ between 50°C and 180°C, as measured according to the method as given in ISO 11357-3 Plastics--Differential Scanning Calorimetry (DSC)--Part 3: Determination of Temperature and Enthalpy of Melting and Crystallization using a heating rate of 10K/min and a cooling rate of 10 K/min. All parameters described in this method apply to the invention disclosed herein.

More in particular, the invention relates to a 3D printing composition comprising at least 40 wt% of a thermoplastic polymer A with a T_{g} of at least 50°C, and at least 2 wt% of a thermoplastic polymer B with a T_{g} below 10°C and a Tₘ between 50°C and 180°C, as measured according to the method described in ISO 11357-3 using a heating rate of 10K/min and a cooling rate of 10 K/min, wherein the amounts of polymer A and polymer B are relative to the total of polymers A and B in the 3D printing composition. Preferably, the amount of the thermoplastic polymer A is at least 50 wt% or at least 60 wt% relative to the total of polymers A and B in the 3D printing composition. Preferably, the amount of the thermoplastic polymer A does not exceed 90 wt% relative to the total of polymers A and B in the 3D printing composition.

The advantage of the said composition comprised in the invention disclosed herein, is the combination of (i) high-performance printability of complex 3D articles including high supportive behavior of the printing composition under optimized printing conditions such as long-term usability of the printer nozzle, (ii) the home-compostability of the 3D printing composition and its resulting printed articles at a rate of about 1 month per 0,1 mm wall thickness under defined compostability conditions, while (iii) achieving a silky look of the 3D printed articles resulting from the specific 3D printing composition, giving the articles an ecological appearance.

For high performance printing, the 3D printability of the article requires sufficiently fast hardening of the softened 3D printing composition when deposited on the growing 3D article. Tg can contribute to such fast hardening if considerably higher than the environment temperature of the printing process. Extra crystallization after direct hardening will further contribute to the mechanical properties of the resulting article.

The 3D printing composition comprises preferably thermoplastic polymers that are biodegradable.

Biodegradability of polymeric materials is known as complete chemical dissolution of these polymers by micro-organisms such as bacteria, fungi, or any other biological means. Extracellular agents such as biosurfactants and enzymes, are known to enhance the biodegradation process.

Compostability thereby enables such biodegradability under home or industrial composting conditions: i.e. within set limits of time and conditional parameters such as temperature, aeration, tumbling, microbial augmentation via starter cultures, and fresh organic feeding to the system besides residence time in the system. Typically, optimized composting conditions are found between 55 - 70°C, although temperature distribution is dependent on biomass amount and moisture. When compost biomass becomes anaerobic, temperatures in the biomass fall rapidly below 50°C, effecting the microbial ecology and its activity. Therefore, composting can be positively influenced by aeration or at least turning the biomass mechanically to expose it better to air. Ideal moisture content is found at 30 - 50 wt% (relative to the total of the biomass), but composting still performs almost equally well at a moisture level up to 75 wt%. Compost microbial communities operate optimally under neutral to slightly acidic conditions, within a pH range of 5 - 8. Older compost biomass tends to rise in pH towards pH 8 - 9, indicating the final composting stage in the process. Compared with industrial composting, home composting often encounters sub-optimal conditions mostly because of lower aeration and temperatures.

Methods for determining biodegradability under anaerobic and aerobic conditions are given in the following ASTM methods:
1. ASTM D5210-07 "Standard Test Method for Determining the Anaerobic Biodegradation of Plastic Materials in the Presence of Municipal Sewage Sludge"
2. ASTM D5338-15 "Standard Test Method for Determining Aerobic Biodegradation of Plastic Materials Under Controlled Composting Conditions, Incorporating Thermophilic Temperatures"
3. ASTM D5511-12 "Anaerobic Biodegradation of Plastic Materials in a High Solids Environment Under High-Solids Anaerobic-Digestion Conditions"
4. ASTM D5526-12 "Standard Test Method for Determining Anaerobic Biodegradation of Plastic Materials Under Accelerated Landfill Conditions"

In polymers the glass transition temperature, Tg, is often expressed as the temperature at which the Gibbs free energy is such that the activation energy for the cooperative movement of at least about 50 elements of the polymer is exceeded. As a consequence, the T_{g} is the temperature at which amorphous polymers undergo a transition from a rubbery, viscous liquid, to a brittle, glassy amorphous solid on cooling.

The term melting point, when applied to polymers, suggests a transition from a crystalline or semi-crystalline phase to a solid amorphous phase. Though abbreviated as simply Tₘ, the property in question is more properly called the crystalline melting temperature.

A standard methodology for determining T_{g} and Tₘ of polymeric materials is described in ASTM E1356: "Standard Test Method for Assignment of the Glass Transition Temperature by Differential Scanning Calorimetry". ISO certification can be done according to ISO 11357-3 "Plastics-Differential Scanning Calorimetry (DSC)-Part 3: Determination of Temperature and Enthalpy of Melting and Crystallization" using a heating rate of 10K/min and a cooling rate of 10 K/min. More in particular, differential scanning calorimetry provides a rapid test method for determining changes in specific heat capacity in a homogeneous material. The glass transition is therein manifested as a step change in specific heat capacity. For amorphous and semicrystalline thermoplastic materials as used in the present invention, the determination of the glass transition temperature may lead to important information about their thermal history, processing conditions, stability, progress of chemical reactions, and mechanical and electrical behavior.

The 3D printing composition of the current invention comprises a polymer A with a T_{g} exceeding 50°C. Polymer A can generally be classified as a polycondensate polymer with branched or linear backbone structures, and containing aliphatic or aromatic moieties.

More preferably, polymer A in the 3D printing composition is a polycondensate comprising monomers belonging to the classes of diols, diacids, anhydrides and hydroxy-acids.

More preferably, polymer A in the 3D printing composition is a polycondensate containing ester bonds.

In an embodiment, polymer A in the 3D printing composition is a polymer comprising diacid and diol monomeric units derived from diacid or anhydride monomers and diol monomers. Examples of diacid monomers are oxalic acid, malonic acid, 2,2-dimethylmalonic acid and cyclohexane-1,4-dicarboxylic acid. Examples of anhydride monomers are phthalic anhydride and maleic anhydride. Examples of diol monomers are ethylene glycol, 1,2-propylene glycol, 1,3-propylene glycol, 2,2-dimethylpropane-1,3-diol, 2,2'-(2,4,8,10-tetraoxaspiro[5,5]undecane-3,9-diyl)bis(2-methylpropan-1-ol), hexahydrofuro[3,2-*b*]furan-3,6-diol, 1,4-phenylenedimethanol and cyclohexane-1,4-diyldimethanol.

In an embodiment polymer A is built from monomers comprising at least one acid and at least one alcohol functional group. Examples of such monomers are 3-hydroxy-2,2'-dimethylpropanoic acid, 4-(hydroxymethyl)cyclohexane-1-carboxylic acid, 2-hydroxy-propanoic acid, 2-hydroxy-butanoic acid and/or 2-hydroxy-valeric acid.

Specific examples of polymer A are (i) the polyester wherein the diacid is oxalic acid and the diol is 2,2'-(2,4,8,10-tetraoxaspiro[5,5]undecane-3,9-diyl)bis(2-methylpropan-1-ol), (ii) the polyester wherein the diacid is succinic acid and the diol is hexahydrofuro[3,2-*b*]furan-3,6-diol, (iii) the polyester wherein the diacid is cyclohexane-1,4-dicarboxylic acid and the diol is 1,4-phenylenedimethanol, (iv) the polyester wherein the anhydride is maleic anhydride and the diol is 2,2-dimethylpropane-1,3-diol, (v) the polyester wherein the monomer is 2-hydroxy-propanoic acid, (vi) the polyester wherein the monomer is 2-hydroxy-butanoic acid, or (vii) the polyester wherein the monomer is 2-hydroxy-valeric acid.

To guarantee good printability with satisfying supportive quality of the composition at limited material use, the fraction of polymer A fulfilling the demand of elevated T_{g} in the 3D printing composition is at least 40 wt% (relative to the total of polymers A and B in the 3D printing composition). Preferably, the 3D printing composition comprises at least 50 wt% of polymer A, more preferably at least 60 wt%, most preferably at least 70 wt%. Preferably, the 3D printing composition comprises less than 98 wt% of polymer A, more preferably, less than 95 wt%, most preferably less than 90 wt%.

Preferably the 3D printing composition comprises between 50-98 wt% polymer A, or between 60 and 95 wt% polymer A, or between 70 and 90 wt% polymer A, relative to the total of polymer A and polymer B.

The 3D printing composition of the current invention also comprises polymer B with a T_{g} below 10°C and a Tₘ between 50°C and 180°C. Polymer B is different from polymer A. Polymer B can generally be classified as a polycondensate polymer with branched or linear backbone structures, and containing aliphatic or aromatic moieties.

More preferably, polymer B in the 3D printing composition is a polycondensate comprising monomers belonging to the classes of diols, diacids, anhydrides and hydroxy-acids.

More preferably, polymer B in the 3D printing composition is a polycondensate containing ester bonds.

More preferably, polymer B in the 3D printing composition is a polymer of diacid or anhydride, and diol monomers, or from monomers containing at least one carboxylic acid and one alcohol group. Examples of diacid monomers are succinic acid, glutaric acid, adipic acid, azeleic acid, sebacic acid, braseleic acid, dimer fatty acid and terephthalic acid. Examples of anhydride monomers are succinic anhydride and glutaric anhydride. Examples of diol monomers are 1,4-butanediol, 1,5-pentanediol, 1,6-hexanediol, 1,9-nonanediol, 1,13-tridecane-diol, and dimer fatty diols. Examples of AB monomers to build polymer B, are 3-hydroxy-butyric acid, 4-hydroxy-butyric acid, 3-hydroxy-valeric acid, 4-hydroxy-valeric acid, 5-hydroxy-valeric acid, 3-hydroxy-caproic acid, 4-hydroxy-caproic acid, 5-hydroxy-caproic acid, 6-hydroxy-caproic acid, 3-hydroxy-heptanoic acid, 4-hydroxy-heptanoic acid, 5-hydroxy-heptanoic acid, 6-hydroxy-heptanoic acid and 7-hydroxy-heptanoic acid.

Specific examples of polymer B are (i) the polyester wherein the diacid is succinic acid and the diol is 1,4-butanediol, (ii) the polyester wherein the diacid is a mixture of succinic acid, adipic acid and terephthalic acid, and the diol is 1,4-butanediol, (iii) the polyester wherein the anhydride is glutaric anhydride and the diol is 1,5-pentanediol, (iv) the polyester wherein the monomer is 3-hydroxy-butyric acid, (v) the polyester wherein the monomer is 6-hydroxy-hexanoic acid, or (vi) the polyester wherein the monomer is 7-hydroxy-heptanoic acid.

To improve compostability of the 3D printing composition and articles thereof, the fraction of polymer B is at least 2wt%, relative to the total amount of polymer A and polymer B.

Preferably, the 3D printing composition comprises at least 5 wt% of polymer B, most preferably at least 10wt%. Generally the 3D printing composition comprises less than 60 wt% polymer B, preferably less than 50 wt%, or less than 40 wt% polymer B, relative to the total amount of polymer A and polymer B.

Preferably, the 3D printing composition comprises at least 50 wt% or at least 60 wt%, of the thermoplastic polymer and at least 5 wt%, of the thermoplastic polymer B, wherein the amounts of polymer A and polymer B are relative to the total of polymers A and B in the 3D printing composition.

In a preferred embodiment, the 3D printing composition and its printed articles are safeguarded from potential toxicological effects during and after the composting process by avoiding classical additives such as phthalate plasticizers, stabilizing agents, fillers and glass fibers.

In one embodiment, less than 5 wt% of these additives are needed in the 3D printing composition of this invention, relative to the total of the 3D printing composition. Preferably, less than 2 wt% of additives are used. Most preferably, less than 1wt% of additives is used. Pigments can be added to the 3D printing composition in minimal amounts, and do not affect composting performance to measurable results, while printing performance is conserved. Preferably, pigments are added in less than 1wt%, relative to the total of the 3D printing composition. More preferably, pigments are added in less than 0,5wt%. Most preferably, pigments are added in less than 0,2wt%.

Fillers can be added to the 3D printing composition. Fillers can be readily inert materials that keep the envisioned functionality at the desired level, while reducing cost of the finalized composition. Fillers can originate from mineral or organic sources, and are known to the person skilled in the art. Examples of mineral fillers are zinc oxide and chalk. Examples of organic fillers are cellulose, starch, wood, flour and wheat dust. Preferably, the 3D printing composition comprises less than 50 wt% fillers, relative to the total weight of the 3D printing composition. More preferably, the 3D printing composition comprises less than 40 wt%, or less than 30 wt% of fillers, relative to the total of the 3D printing composition.

The invention also relates to a method of preparing a 3D article comprising the steps of sequentially forming a plurality of layers each patterned according to the shape of a cross section of the article, thereby forming the article, wherein the layers are formed by depositing the 3D printing composition according to the present invention.

3D printing, also known as additive manufacturing, refers to various processes used to synthesize a three-dimensional object. In 3D printing, successive layers of material are formed as a result of computer controlled layer deposition. The resulting articles can be of almost any shape or geometry, and are produced from a 3D model or other electronic data source. A 3D printer is used for this process and constitutes a type of industrial robot. Open-source collaboration has been enabling for the development of 3D printers that became accessible to the broad public. The 3D printing composition of the current invention resulting in compostable printed articles, expands the toolbox and the sustainability profile of usable materials with these 3D printers.

3D articles resulting from the printing of the 3D printing composition of the current invention in the additive manufacturing process, have an apparent silk look. This look may be created by the article's shimmering appearance causing refraction of incoming light at different angles. It is believed that the printed article typically contains a surface texture that shows regular microcrystalline fibrillous substructures on the surface, as a result of time-separated solidification of polymers A and B in the invented 3D printing composition. As a result of the caused refraction, slightly different wave-lengths give rise to minimally different colors, coming to the eye as a pleasant silky look.

Both the amplitude and frequency of the surface texture determine the shimmering appearance, which can be quantified with roughness parameter Rₐ as the arithmetic average of the roughness profile, while Pₐ is the arithmetic average of the unfiltered raw profile, and Sₐ is the arithmetic average of the 3D roughness. For all parameters reducing the information in a surface profile into single numbers, interpretation must be further documented and based on assumptions. For instance, minimal changes in the way raw profile data is filtered or the mean line is calculated, including effects linked to the physics of the measurement, can cause severe deviations in parameter quantification. The ISO 25178 standard is used to determine surface roughness parameters in sample materials.

The compostability of the invented 3D printing composition and its printed articles can be further induced by physical treatment on a macromolecular level before disposal. It is known that increase of specific surface of the disposed objects by such treatment can cause accelerated compostability. Shreddering is a known technology to cause this specific surface increase.

### Examples

### Example 1

A blend was made of 8 gram of the polymer of 2-hydroxy-propanoic acid (T_{g}=60°C) and 2 gram of the polymer of succinic acid and 1,4-butanediol (T_{g}=-30°C, Tₘ=95°). The homogenized blend was brought to its molten status at a temperature of 190°C to yield a printable 3D printing composition, which was subjected to an open-source Ultimaker 2 printer, allowing fast-drying printing of a complex article with an inversed hollow but closed pyramidal form with 45° inclined sides and a wall thickness between 0,4 and 0,8mm. The fast drying nature of the 3D printing composition guaranteed sufficient supporting properties to print the inversed pyramidal form without the use of extra supportive printing agents, and showed a silky look.

### Example 2

A blend was made of 7 gram of the polymer of 2-hydroxy-propanoic acid (T_{g}=60°C) and 3 gram of the polymer of succinic acid and 1,4-butanediol (T_{g}=-30°C, Tₘ=95°). The same methods were applied as in example 1. The resulting 3D printing composition guaranteed sufficient supporting properties to print an analogous inversed hollow fully closed pyramidal form as in example 1 without the use of extra supportive printing agents, and had an apparent silk look.

### Example 3

A blend was made of 7 gram of the polymer 2-hydroxy-butanoic acid (Tg=68°C) and 3 gram of the polymer of 6-hydroxy-hexanoic acid (Tg=-60°C, Tm=60°C). The same methods were applied as in example 1. The resulting 3D printing composition guaranteed sufficient supporting properties to print an analogous inversed hollow fully closed pyramidal form as in example 1 without the use of extra supportive printing agents, and had an apparent silk look.

### Example 4

The compostable 3D printing composition of example 1 was used to produce two replica printed articles of 10 gram each for composting experiments. The wall thickness was controlled between 0,4 and 0,8mm according to the printing software. The unschreddered home-composted article had lost over 80% of its initial weight after 150 days. The replica article was subjected to a short shredder cyclus (30 seconds), yielding about 250 granulated pieces as counted, before starting the composting. The effect of shreddering reduced the time required for over 80% weight loss from 150 to 85 days.

### Example 5

A blend was made of 7,5 gram of the polymer of 2-hydroxy-propanoic acid (T_{g}=60°C) and 2,5 gram of the polymer of adipic acid and 1,4-butanediol and terephthalic acid (T_{g}=-28°C and Tₘ=112°C). This blend was applied as in Example 1 to print test bars of 7 cm length for mechanical property evaluation. The bars showed a tensile strength of 38 MPa and tensile modulus of 2,15 GPa. The bars showed good ductility and flexibility.

### Example 6

Example 1 was repeated at different overhang slopes in a test series from 25°-75° (per 5° intervals). Overhang limit for printing without downward surface roughness (<2mm roughness) was around 55°.

### Comparative experiment 1

A 3D printing filament of the polymer of 2-hydroxy-propanoic acid (T_{g}=60°C) was subjected to the same methods as used in example 1. The resulting inversed pyramidal form did not require extra supportive printing agents and had a tarnished-shiny appearance.

### Comparative experiment 2

The 3D printed article of comparative experiment 1 was produced in two replica articles of 10 gram each for composting experiments. The wall thickness was controlled between 0,4 and 0,8mm according to the same printing software as in experiment 1. Both shreddered and unshreddered articles had lost less than 50% respectively 30% of their weight after 150 days under similar composting conditions as in example 3.

### Comparative experiment 3

A blend was made of 9,5 gram of the polymer of 2-hydroxy-propanoic acid (T_{g}=60°C) and 0,5 gram of the polymer of succinic acid and 1,4-butanediol (T_{g}=-30°C, Tₘ=95°). A 3D printing filament of this blend was subjected to the same methods as used in example 1. The wall thickness was controlled between 0,4 and 0,8mm according to the same printing software as in experiment 1. The resulting inversed pyramidal form did not require extra supportive printing agents and had a tarnished-silky appearance. Both shreddered and unshreddered articles had lost less than 60% respectively 40% of their weight after 150 days under similar composting conditions as in example 3.

### Comparative experiment 4

A blend was made of 4,4 gram of the polymer 2-hydroxy-butanoic acid (T_{g}=68°C) and 5,6 gram of the polymer of 6-hydroxy-hexanoic acid (T_{g}=-60°C, Tₘ=60°C). The same methods were applied as in example 1. The resulting 3D printing composition resulted in under performing printing characteristics: overhang printing was reduced from 55° to <25°, surface appearance was rough and disordered in stead of smooth and silky. The maximal printing ventilation on the Ultimaker 2 printing device did not compensate for slower hardening property of the softened extruded polymeric material. This slow hardening behavior of the material composition could only be compensated by bringing the printing speed below 50% of the optimal material compositions as in examples 1-3 in the preferred composition ranges for polymers A and B. The slow printing speed was directly related to the suboptimal material composition.

### Comparative experiment 5

The blend of comparative example 4 was used to print the same bars as example 5. The bars dropped tensile strength below 28 MPa and tensile modulus below 1,0 GPa.

### Comparative experiment 6

The blend of comparative example 3 was used to print the same bars as example 5. The bars showed inferior flexibility and toughness, creating sudden breakage due to brittleness.

## Claims

1. A 3D printing composition comprising at least 2 thermoplastic polymers A and B, wherein polymer A has a glass transition temperature (Tg) of at least 50°C, and wherein polymer B has a Tg below 10°C and a Tm between 50°C and 180°C, as measured according to the method as given in ISO 11357-3 using a heating rate of 10K/min and a cooling rate of 10 K/min.

2. The composition according to claim 1, wherein the 3D printing composition comprises at least 40 wt% of the thermoplastic polymer A and at least 2 wt% of the thermoplastic polymer B, wherein the amounts of polymer A and polymer B are relative to the total of polymers A and B in the 3D printing composition.

3. The composition according to claim 1, wherein the 3D printing composition comprises at least 50 wt% or at least 60 wt% of the thermoplastic polymer A and at least 5 wt% of the thermoplastic polymer B, wherein the amounts of polymer A and polymer B are relative to the total of polymers A and B in the 3D printing composition.

4. The composition according to anyone of the preceding claims, wherein polymer A in the 3D printing composition is a polycondensate comprising monomers belonging to the classes of diols, diacids, anhydrides and hydroxy-acids.

5. The composition according to anyone of the preceding claims, wherein polymer A is chosen from (i) the polyester wherein the diacid is oxalic acid and the diol is 2,2'-(2,4,8,10-tetraoxaspiro[5,5]undecane-3,9-diyl)bis(2-methylpropan-1-ol), (ii) the polyester wherein the diacid is succinic acid and the diol is hexahydrofuro[3,2-*b*]furan-3,6-diol, (iii) the polyester wherein the diacid is cyclohexane-1,4-dicarboxylic acid and the diol is 1,4-phenylenedimethanol, (iv) the polyester wherein the anhydride is maleic anhydride and the diol is 2,2-dimethylpropane-1,3-diol, (v) the polyester wherein the monomer is 2-hydroxy-propanoic acid, (vi) the polyester wherein the monomer is 2-hydroxy-butanoic acid, or (vii) the polyester wherein the monomer is 2-hydroxy-valeric acid.

6. The composition according to anyone of the preceding claims, wherein the 3D printing composition comprises between 60 and 95 wt% A, or between 70 and 90 wt% A, relative to the total of polymer A and polymer B.

7. The composition according to anyone of the preceding claims, wherein polymer B in the 3D printing composition is a polycondensate comprising monomers belonging to the classes of diols, diacids, anhydrides and hydroxy-acids.

8. The composition according to anyone of the preceding claims, wherein polymer B is chosen from (i) the polyester wherein the diacid is succinic acid and the diol is 1,4-butanediol, (ii) the polyester wherein the diacid is a mixture of succinic acid, adipic acid and terephthalic acid, and the diol is 1,4-butanediol, (iii) the polyester wherein the anhydride is valeric anhydride and the diol is 1,5-pentanediol, (iv) the polyester wherein the monomer is 3-hydroxy-butyric acid, (v) the polyester wherein the monomer is 6-hydroxy-hexanoic acid, or (vi) the polyester wherein the monomer is 7-hydroxy-heptanoic acid.

9. A method of preparing a 3D article comprising the steps of sequentially forming a plurality of layers each patterned according to the shape of a cross section of the article, thereby forming the article, wherein the layers are formed by depositing the 3D printing composition according to anyone of claims 1-8.

10. 3D articles resulting from the printing of the 3D printing composition according to anyone of claims 1-8.

11. The 3D article according to claim 10, wherein the article has a shimmering appearance causing refraction of incoming light at different angles due to regular microcrystalline fibrillous substructures on the surface, thus producing different colors and resulting in a silky look.

12. A method of improving the compostability of the 3D article according to claim 10 or 11, by shreddering the article and allowing the article to degenerate under composting conditions.
